# EUROPÄISCHE PATENTSCHRIFT

(11) **EP 3 628 650 B1**
(45) Veröffentlichungstag und Bekanntmachung des Hinweises auf die Patenterteilung: **01.02.2023**
(21) Anmeldenummer: 19192014.9
(22) Anmeldetag: 16.08.2019
(51) Int. Cl.: C05F 3/00, C05B 7/00, C05F 7/00, C05B 9/00

(54) **VERFAHREN UND ANLAGE ZUR STOFFLICHEN VERWERTUNG EINES AMMONIUM- , PHOSPHAT- UND FESTSTOFFHALTIGEN MEDIUMS**
METHOD AND INSTALLATION FOR THE USE OF A MEDIUM CONTAINING AMMONIUM , PHOSPHATE AND SOLIDS
PROCÉDÉ ET APPAREIL DE RECYCLAGE DES MATÉRIAUX D'UN MILIEU CONTENANT DE L'AMMONIUM , DU PHOSPHATE ET DES SOLIDES

(30) Priorität: 13.09.2018 DE 102018122354
(43) Veröffentlichungstag der Anmeldung: 01.04.2020
(73) Patentinhaber: Geltz Umwelttechnologie GmbH, 75417 Mühlacker (DE)
(72) Erfinder: Geltz, Ulrich, 75223 Niefern-Öschelbronn (DE); Geltz, Fabian, 75417 Mühlacker (DE); Maier, Isabella, 75387 Neubulach (DE)
(74) Vertreter: Wacker, Jost Oliver

(56) Entgegenhaltungen:
- WO-A1-2011/089019
- WO-A1-2018/067631
- DE-A1-102015 118 900
- DE-A1-102016 122 869
- US-A1- 2017 327 427

## Beschreibung

Die Erfindung betrifft ein Verfahren zur stofflichen Verwertung eines ammonium- und feststoffhaltigen Mediums, nach dem Oberbegriff des Anspruchs 1 sowie eine Anlage zur Durchführung eines solchen Verfahrens. Das ammonium- und feststoffhaltige Medium kann dabei insbesondere durch landwirtschaftliche, industrielle oder kommunale Reststoffe gebildet sein, wie beispielsweise Gülle oder Gärreste aus Fermentern. Das Verwertungsverfahren sieht dabei einen Feststoffabtrennungsschritt vor, bei dem insbesondere nährstoffarme Feststoffe aus dem Medium abgetrennt werden. Anschließend erfolgt ein Fällungsschritt, bei dem Phosphatsalze abgetrennt werden, und hiernach ein Strippungsschritt, durch den Stickstoffverbindungen aus dem Medium gewonnen werden. Dabei wird vor dem Feststoffabtrennungsschritt eine Ansäuerung des Mediums vorgenommen, bei der das Medium in einer Ansäuerungsstufe mit einer Säure durchmischt wird. Bei dieser Ansäuerung wird ein pH-Wert des Mediums zwischen 3 und 6 eingestellt, wodurch sowohl eine ausreichende Lösung der Phosphatsalze als auch eine wirksame Verringerung der Ammoniakausgasungen erreicht werden kann. Beim späteren Fällungsschritt wird dann eine separate Filtration des Mediums zur Abtrennung ausgefallener Phosphatsalze vorgenommen. Hierdurch können die in dem zu behandelnden Medium ausgefallenen Phosphatsalze zu Beginn des Verfahrens und insbesondere vor dem Feststoffabtrennungsschritt zunächst in Lösung gebracht werden. Dadurch verbleiben die Phosphatsalze während des Feststoffabtrennungsschrittes zu einem deutlich größeren Teil im Medium beziehungsweise im hiernach anfallenden Permeat. Durch die dem Feststoffabtrennungsschritt nachgeschaltete separate Filtration im Fällungsschritt können die Phosphatsalze dann in größerer Menge gewonnen werden.

Nach dem Stand der Technik erfolgt die Entfernung von Ammonium-Stickstoff aus einem Medium wie Gülle oder Gärresten üblicherweise durch Strippung. Hierzu muss der im betreffenden Medium enthaltene Ammonium-Stickstoff in Ammoniak-Stickstoff überführt werden. Ammonium (NH₄⁺) und Ammoniak (NH₃) stehen miteinander entsprechend der Reaktionsgleichung NH₄ ⁺ + OH ⁻ ⇄NH₃ + H₂O in einem Gleichgewicht.

Ein Verfahren zur stofflichen Verwertung von ammoniumhaltigem Abwasser ist aus EP0915058A2 bekannt. Bei diesem bekannten Verfahren werden zunächst die Feststoffe abgetrennt. Anschließend erfolgt beispielsweise die Zugabe von Magnesiumsalz als Fällmittel zur Fällung von Ammonium in Form von Magnesiumammoniumphosphat. Nach dessen Abtrennung kann das Magnesiumammoniumphosphat unter Gewinnung von Ammoniak und Magnesiumsalz thermisch zersetzt werden, wie beispielsweise im Zuge einer Dampf/Luft-Strippung.

Nachteilig an dem bekannten Verfahren zur stofflichen Verwertung von ammonium- und feststoffhaltigen Medien ist, dass hierbei lediglich eine relativ begrenzte stoffliche Verwertung erfolgt, bei der einige Wertstoffe ungenutzt im Medium verbleiben. Zudem ist bei der bekannten Vorgehensweise die Zugabe von Magnesium zur Fällung von Magnesiumammoniumphosphat erforderlich. In einem weiteren Schritt kann dann lediglich aus dem Magnesiumammoniumphosphat-Fällsalz Ammoniak gewonnen werden. Eine kostengünstige und weitestgehend vollständige Entfrachtung des Mediums von Phosphat und Stickstoff ist in diesem Verfahren somit nicht möglich.

DE102016122869A1 beschreibt ein Verfahren zur Aufbereitung von biologischen Abfällen, wie beispielsweise Gülle, bei dem nach dem Abtrennen grober Feststoffe zunächst partikulär gebundene Phosphate durch Einleiten von CO2 gelöst werden und die Flüssigphase anschließend angesäuert wird, um den CO2-Gehalt zu reduzieren. Hiernach erfolgt dann das Austreiben von NH3 durch Stripping sowie hiernach das Fällen von Calcium-Phosphat.

WO2018/067631A1 beschreibt ein Verfahren zur Behandlung von Abwasser, das aus einem Absetzbecken oder einem Belebtschlammbecken stammt. Dieses wird zur Herstellung organischer Säure in einen Faulbehälter gegeben und anschließend einem Feststoffabscheider zugeführt. In einem Reaktor wird anschließend Phosphat abgetrennt. Aus dem verbleibenden Medium kann zudem Ammonium abgetrennt werden, wie beispielsweise durch Strippung.

WO2011/089019A1 beschreibt ein Verfahren zur Phosphorgewinnung aus Mist und Biomasse, bei dem zur Ansäuerung ein Fermentierungsschritt vorgesehen ist. Nach der Beschreibung kann dabei zudem auch eine Strippung zur Abtrennung von Ammoniak vorgesehen werden.

US2017/0327427A1 ein Verfahren zur Phosphorextraktion, bei dem ein vorgefilterter Dünger angesäuert und einer mehrstufigen Mikrofiltration und Fällung zugeführt wird. In einem weiteren Schritt wird durch das Einblasen von Luft in das Medium Ammoniak von der flüssigen in die gasförmige Phase übergeleitet und abgetrennt.

Die Aufgabe der Erfindung ist es, bei einem gattungsgemäßen Verfahren die genannten Nachteile zu vermeiden und eine bessere stoffliche Verwertung sowie eine wirtschaftlichere Gewinnung der Wertstoffe zu gewährleisten.

Diese Aufgabe wird durch ein Verfahren zur stofflichen Verwertung eines ammonium- und feststoffhaltigen Mediums mit den Merkmalen des Anspruchs 1 gelöst. Dabei wird zwischen dem Fällungsschritt und dem Strippungsschritt eine Konditionierung des verbleibenden Mediums vorgenommen, bei der dieses auf eine Temperatur zwischen 40 und 60 °C erwärmt und dessen pH-Wert auf 10 bis 13 weiter angehoben wird. In der Konditionierung wird der Überstand nach der Alkalisierung für den Strippungsprozess vorbereitet. Dabei wird der Überstand erwärmt und der pH-Wert weiter angehoben, sodass sich das Ammonium-Ammoniak-Gleichgewicht zu Gunsten des Ammoniaks verschiebt. Die pH-Wertanhebung erfolgt unter einer pH-Wertüberwachung durch die Zugabe einer geeigneten Lauge. Der optimale Betriebspunkt hinsichtlich der Parameter pH-Wert und Temperatur ist entsprechend des örtlichen Wärmeüberschusses und der Chemikalienpreise variabel. Als Lauge kann beispielsweise Natronlauge (NaOH) verwendet werden. Zudem können durch die vorab vorgenommene Ansäuerung Ammoniakausgasungen verringert werden, so dass auch im späteren Strippungsverfahren ein größerer Ertrag hinsichtlich der verwertbaren abgetrennten Stickstoffverbindungen erzielt werden kann. Die Ansäuerung ermöglicht somit sowohl hinsichtlich Menge als auch hinsichtlich der Reinheit der nährstoffarmen organischen Feststoffe eine verbesserte Abtrennung aus dem Medium und somit insgesamt eine effizientere Wertstoffgewinnung.

Zudem ist es günstig, wenn die Ansäuerung mittels Schwefelsäure erfolgt, um eine sichere und kostengünstige Verfügbarkeit der für das Verfahren verwendeten Säure gewährleisten zu können.

Vorteilhafterweise umfasst der Feststoffabtrennungsschritt eine Vorfiltration und eine dieser nachgeschaltete Mikrofiltration. Die Vorfiltration entfernt dabei grobe Feststoffe aus dem Medium und dient dazu, die nachgelagerte Mikrofiltration zu schützen. Die Mikrofiltration ist üblicherweise als Membranfiltration im Querstrom ausgeführt. Es werden Filterschärfen von bis zu 0,5 µm, vorzugsweise bis zu 0,1 µm verwendet, wodurch insbesondere auch Feststoffe in Form von Bakterien zurückgehalten werden können. Durch diesen wenigstens zweistufigen Feststoffabtrennungsschritt können relativ große Anteile der im Medium enthaltenen Feststoffe, wie insbesondere nährstoffarme organische Feststoffe abgetrennt werden. Die organischen Feststoffe werden dabei in nährstoffarmer Form abgetrennt, so dass diese gezielter verwertet und wirtschaftlicher vermarktet werden können, wie beispielsweise als humusbildender Bodenverbesserer in der Landwirtschaft. Ein weiterer Vorteil des hohen Abtrennungsgrades der Feststoffe besteht darin, dass in den nachfolgenden Verfahrensschritten weniger Verblockungen auftreten und der Reinigungsaufwand beziehungsweise die Stillstandszeiten verringert werden können.

Im Zuge des Fällungsschrittes wird eine Alkalisierung des Mediums vorgenommen. Bei der Alkalisierung wird der pH-Wert des nun als Permeat vorliegenden Mediums durch einen Laugezusatz angehoben, sodass Phosphatsalze in einer Fällungskristallisation ausfallen. Aufgrund Ihrer Dichte können die Phosphatsalze sedimentieren und anschließend der Phosphatsalzabtrennung zugeführt werden. Die Alkalisierung erfolgt unter einer pH-Wertüberwachung durch die Zugabe einer geeigneten Lauge.

In einer weiteren vorteilhaften Ausführungsform wird bei der Alkalisierung der pH-Wert des Mediums beziehungsweise des Permeats in einen Bereich von 8 bis 10 angehoben. Hierdurch kann eine möglichst vollständige Fällung der Phosphatsalze erreicht werden.

Dabei ist es in jedem Fall günstig, wenn dem Medium beziehungsweise dem Permeat bei der Alkalisierung Natronlauge und/oder Calciumhydroxid zugegeben wird, wodurch die für die Abtrennung geeignete Zusammensetzung der Phosphatsalze besonders genau eingestellt werden kann.

Vorteilhafterweise werden die beim Strippungsschritt abgetrennten Stickstoffverbindungen in Form einer Ammoniumsulfatlösung durch saure Gaswäsche mit Schwefelsäure ausgegeben, wodurch die gewonnenen Stickstoffverbindungen besonders komfortabel weiterverarbeitet beziehungsweise vermarktet werden können, wie beispielsweise für die Düngerherstellung.

Darüber hinaus ist es günstig, wenn ein bei der Strippung anfallendes Restwasser mittels einer Umkehrosmose weiter aufbereitet wird. Hierdurch kann auch das am Ende des erfindungsgemäßen Verfahrens anfallende Restwasser derart aufbereitet werden, dass es ausgebracht beziehungsweise als Brauchwasser genutzt werden kann. Das Permeat der Umkehrosmose kann dabei direkt in einen Vorfluter eingeleitet werden. Das im Übrigen bei der Umkehrosmose anfallende Retentat weist dabei zudem einen relativ hohen Kaliumgehalt auf, so dass auch dieses in der Düngemittelherstellung verwendet werden kann. Auf diese Weise kann mittels des erfindungsgemäßen Verfahrens eine im Wesentlichen vollständige stoffliche Verwertung des zu behandelnden Mediums erzielt werden.

Ferner wird die genannte Aufgabe durch eine Anlage gemäß Anspruch 7 mit einer Filtrationsstufe, einer Fällungsstufe und einer Strippungseinrichtung zur Durchführung des Verfahrens in einer der oben beschriebenen Ausführungsformen gelöst, wobei die Fällungsstufe eine separate Trenneinrichtung für die Phosphatsalzabtrennung aufweist. Hierdurch ermöglicht die Anlage die Abtrennung der Phosphatsalze ohne gewichtige organische Verunreinigung und dadurch eine besonders gute Verwertung beziehungsweise Vermarktung derselben. Hierbei ist vor der Filtrationsstufe dabei eine Ansäuerungsstufe vorgesehen, mittels der die in dem zu behandelnden Medium ausgefallenen Phosphatsalze vor der Filtrationsstufe zunächst in Lösung gebracht werden können. Dadurch verbleiben die Phosphatsalze in der Filtrationsstufe zumindest zu einem großen Teil im Medium beziehungsweise im anfallenden Permeat. Durch die der Filtrationsstufe nachgeschaltete separate Filtration im Fällungsschritt können die Phosphatsalze dann in größerer Menge gewonnen werden. Zudem können durch die vorab vorgenommene Ansäuerung Ammoniakausgasungen verringert werden, so dass auch im späteren Strippungsverfahren ein größerer Ertrag hinsichtlich der verwertbaren abgetrennten Stickstoffverbindungen erzielt werden kann.

Hierbei weist die Ansäuerungsstufe vorteilhafterweise einen Rührbehälter auf, in dem das Mediums mit einer für die Ansäuerung verwendeten Säure in ausreichendem Maße vermischt werden kann. Hierdurch kann gewährleistet werden, dass die im Medium enthaltenen ausgefallenen Phosphatsalze vor der Filtrationsstufe möglichst vollständig in Lösung gebracht werden.

Erfindungsgemäß ist zwischen der Fällungsstufe und der Strippungseinrichtung zudem eine Konditionierungsstufe vorgesehen, die sowohl eine Dosierungseinrichtung für die Zudosierung einer Lauge zum Medium als auch eine Temperiereinrichtung für die Erwärmung des Mediums aufweist. Hierdurch kann in der nachgeschalteten Strippung eine besonders effiziente Abtrennung der im verbleibenden Medium enthaltenen Stickstoffverbindungen erzielt werden.

Zudem ist es von Vorteil, wenn die Ansäuerungsstufe eine pH-Wert-Mess- und Regeleinrichtung aufweist. Auf diese Weise kann eine exakte Zudosierung der bei der Ansäuerung verwendeten Säure sowie deren ausreichende Vermischung mit dem Medium gewährleistet werden, um im Medium einen möglichst gleichmäßig verteilten pH-Wert im Bereich von 3 bis 6 einstellen zu können.

Ferner ist es günstig, wenn die Filtrationsstufe eine Grobfiltereinrichtung für die Vorfiltration und eine dieser nachgeschaltete Membranfiltereinrichtung für die Mikrofiltration aufweist, wodurch ein zuverlässiger und effizienter Betrieb der Filtrationsstufe und der Anlage insgesamt gewährleistet werden kann.

Ferner ist es von Vorteil, wenn die Grobfiltereinrichtung eine Schneckenpresse, eine Dekanterzentrifuge, einen Wendelfilter und/oder einen Kantenspaltfilter aufweist, um eine effiziente und störungsfreie Abtrennung grober Feststoffe aus dem Medium gewährleisten zu können.

Zudem ist es vorteilhaft, wenn die Membranfiltereinrichtung vibrierende Membrane und/oder Kissenmodule mit einer Porengröße von maximal 0,5 µm, vorzugsweise 0,1 µm aufweist. Hierdurch können Feststoffe, wie insbesondere Bakterien, zuverlässig zurückgehalten werden. Zudem können Verblockungen der Membrane durch grobe Feststoffe auf diese Weise vermieden werden.

In einer besonders vorteilhaften Ausführungsform weist die separate Trenneinrichtung der Fällungsstufe eine Dekanterzentrifuge, eine Kammerfilterpresse und/oder einen Bandfilter auf, wodurch eine besonders effiziente Abtrennung der Phosphatsalze aus dem Medium erzielt werden kann.

Dabei ist es günstig, wenn die Fällungsstufe eine Sedimentationsstufe aufweist, wodurch die Phosphatsalze besonders wirksam abgetrennt werden können.

Ferner ist es günstig, wenn der Strippungseinrichtung zusätzlich noch eine Umkehrosmosestufe nachgeschaltet ist. Durch diese kann aus dem verbleibenden Medium aufbereitetes Wasser gewonnen werden, das beispielsweise als Brauchwasser verwertbar ist oder direkt eingeleitet werden kann. Das bei der Umkehrosmose ferner anfallende Retentat weist dabei zudem einen derart hohen Kaliumgehalt auf, dass auch dieses für die Düngemittelherstellung verwendet werden kann und somit eine im Wesentlichen vollständige Verwertung des Mediums erzielt wird.

In der Figur ist eine beispielhafte Ausführungsform der Erfindung dargestellt. Es zeigt:

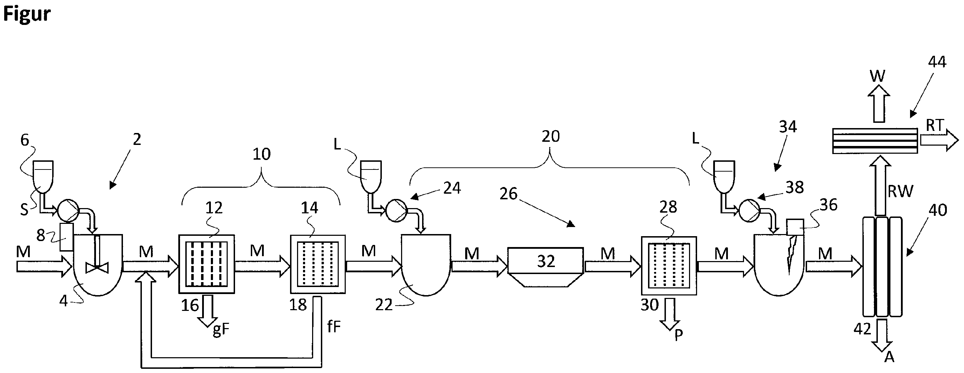

- Figur 1: einen schematischen Aufbau einer Anlage zur Durchführung eines erfindungsgemäßen Verfahrens zur stofflichen Verwertung eines ammonium- und feststoffhaltigen Mediums.

Wie aus der Figur zu entnehmen ist, wird bei der hierin dargestellten Anlage ein ammonium- und feststoffhaltiges Medium M, das aus landwirtschaftlichen, industriellen oder kommunalen Reststoffen besteht, zunächst in eine Ansäuerungsstufe 2 gegeben. Das Medium M kann dabei insbesondere durch Gülle oder Gärreste aus Fermentern gebildet sein.

Die Ansäuerungsstufe 2 weist einen Rührbehälter 4 und eine Dosiereinrichtung 6 zur Abgabe von Säure S, wie beispielsweise Schwefelsäure, in den Rührbehälter 4 auf, wobei die Abgabe über eine pH-Wert-Mess- und Regeleinrichtung 8 gesteuert beziehungsweise geregelt ist.

Die Ansäuerungsstufe 2 ist einer Filtrationsstufe 10 vorgeschaltet, die eine Grobfiltereinrichtung 12 und eine dieser nachgeschalteten Membranfiltereinrichtung 14 aufweist. Die Grobfiltereinrichtung 12 weist beispielsweise eine Schneckenpresse, eine Dekanterzentrifuge, einen Wendelfilter und/oder einen Kantenspaltfilter für die Abtrennung grober Feststoffe gF sowie einen Auslass 16 auf, über den die abgetrennten groben Feststoffe gF abgegeben werden können.

Die Membranfiltereinrichtung 14 weist beispielsweise vibrierende Membrane und/oder Kissenmodule mit einer Porengröße von maximal 0,5 µm, vorzugsweise 0,1 µm, für die Mikrofiltration feiner Feststoffe fF, wie insbesondere organischer Feststoffe auf. Die feinen Feststoffe fF werden im Retentat der Mikrofiltration aufkonzentriert und in die Grobfiltereinrichtung zurückgeführt.

Der Filtrationsstufe 10 ist wiederum eine Fällungsstufe 20 nachgeschaltet, bei der in einem Prozessbehälter 22 der pH-Wert des durch das Permeat der Filtrationsstufe 10 gebildeten verbleibende Medium M angehoben werden kann. Zur Durchführung dieser Alkalisierung ist eine Dosiereinrichtung 24 vorgesehen, mittels der eine Lauge L, wie Natronlauge und/oder Calciumhydroxid in den Prozessbehälter 22 abgegeben werden kann.

Der Alkalisierung der Fällungsstufe 20 ist eine Sedimentationsstufe 32 und eine Phosphatsalzabtrennung 26 mit einer separaten Trenneinrichtung 28 nachgeschaltet, die beispielsweise durch eine Dekanterzentrifuge, eine Kammerfilterpresse und/oder einen Bandfilter gebildet ist. Die Trenneinrichtung 28 dient dabei zur Abtrennung ausgefallener Phosphatsalze P aus dem Medium M. Zur Abgabe der hierbei gewonnen Phosphatsalze P weist die Phosphatsalzabtrennung 26 ferner einen Auslass 30 auf.

Nach der Filtration durch die Trenneinrichtung 28 der Phosphatsalzabtrennung 26 wird das verbleibende Medium M an eine Konditionierungsstufe 34 abgegeben, wo diese durch eine Temperiereinrichtung 36 erwärmt und mittels einer weiteren Dosiereinrichtung 38 zur Abgabe einer Lauge L auf einen neuen pH-Wert erhöht werden kann.

Der Konditionierungsstufe 34 schließt sich wiederum eine Strippungseinrichtung 40 an, mittels der ferner Stickstoffverbindungen, wie Ammoniumsulfat A abgetrennt werden können. Dieses kann dann insbesondere in Form einer Ammoniumsulfatlösung über einen Auslass 42 abgegeben werden.

Darüber hinaus fällt an der Strippungseinrichtung 40 Restwasser RWan, das in eine nachgeschaltete Umkehrosmosestufe 44 eingeleitet werden kann, um ein aufbereitetes Wasser W zu erhalten.

Bei der Durchführung des erfindungsgemäßen Verfahrens wird das Medium M in der Ansäuerungsstufe 2 mit der Säure S durchmischt und dabei auf einen pH-Wert im Bereich von 3 bis 6 eingestellt. Hierdurch werden im Medium ausgefallene Phosphatsalze P in Lösung gebracht und die Ammoniakausgasungen verringert.

Anschließend erfolgt die Vorfiltration in der Grobfiltereinrichtung 12, bei der die groben Feststoffe gF aus dem Medium M entfernt werden und anschließend die Mikrofiltration in der Membranfiltereinrichtung 14. Durch die bei dieser verwendeten Porengröße von maximal 0,5 µm, beziehungsweise bevorzugt 0,1 µm, werden organische Feststoffe, die insbesondere auf Bakterien zurückgehen, zurückgehalten und in die Grobfiltereinrichtung zurückgeführt.

Nach dem Feststoffabtrennungsschritt in der Filtrationsstufe 10 folgt die Alkalisierung in der Fällungsstufe 20, bei der der pH-Wert des Permeats beziehungsweise des verbleibenden Mediums M durch Zudosieren der Lauge L über die Dosiereinrichtung 24 auf einen pH-Wert im Bereich zwischen 8 und 10 angehoben wird. Hierdurch können die Phosphatsalze in einer Fällungskristallisation ausfallen und aufgrund Ihrer Dichte in der Sedimentationsstufe 32 sedimentieren. Im Anschluss hieran werden sie dann der Phosphatsalzabtrennung 26 zugeführt, wo sie mittels der Trenneinrichtung 28 aus dem Sediment als Feststoff gewonnen werden.

In der Konditionierung wird das in der Anlage verbleibende Medium M nach der Fällungsstufe 20 für den Strippungsprozess vorbereitet. Dabei wird der Überstand erwärmt und der pH-Wert durch Zudosierung der Lauge L mittels der Dosierungseinrichtung 38 weiter angehoben, sodass sich das Ammonium-Ammoniak-Gleichgewicht zu Gunsten des Ammoniaks verschiebt. Die pH-Wertanhebung erfolgt unter einer pH-Wertüberwachung bis zu einem Wert zwischen 10 und 13. Als Lauge kann beispielsweise Natronlauge (NaOH) verwendet werden. Gleichzeitig erfolgt mittels der Temperiereinrichtung 36 eine Erwärmung des Mediums M auf eine Temperatur zwischen 40 und 60°C.

In der Strippungseinrichtung 40 erfolgt dann der Strippungsschritt, bei dem das Ammoniumsulfat A abgetrennt wird und als Lösung über den Auslass 42 abgegeben werden kann. Bei der Strippung wird das Aggregatszustands-Gleichgewicht flüssig/gasförmig des Ammoniaks in Richtung gasförmig verschoben. Dazu wird das Medium M in der Strippereinrichtung 40 von oben nach unten geleitet, vorzugsweiße über eine Schüttkörperfüllung oder eine strukturierte Füllkörperpackung. Die Packung dient zur Maximierung der Oberfläche der Flüssigkeit. Im Gegenstrom wird Luft oder Dampf durch die Packung geführt, die über die Flüssigkeitsoberfläche mit der Flüssigkeit in Kontakt tritt. Dabei wird Ammoniak in die Gasphase überführt. Das Gas wird folglich mit Ammoniak angereichert, die Flüssigkeit wird abgereichert. Das mit Ammoniak abgereicherte Gas wird mittels Gaswäscher mit einer geeigneten Säure gewaschen, wobei eine Ammoniumlösung gewonnen wird. Beispielsweise kann durch Gaswäsche mit Schwefelsäure Ammoniumsulfatlösung gewonnen werden. Ferner fällt beim Strippungsschritt das Restwasser RW an, das mittels der Umkehrosmoseeinrichtung 44 zum Wasser W aufbereitet werden kann, das als Brauchwasser oder zur Einleitung in einen Vorfluter verwendet werden kann. Zudem kann ein an der Umkehrosmoseeinrichtung 44 zurückgehaltenes und besonders kaliumhaltiges Retentat RT für die Düngemittelherstellung verwendet werden.

## Patentansprüche

1. Verfahren zur stofflichen Verwertung eines ammonium- und feststoffhaltigen Mediums (M), wie insbesondere aus landwirtschaftlichen, industriellen oder kommunalen Reststoffen, bei dem
a) in einem Feststoffabtrennungsschritt Feststoffe (gF, fF),
b) in einem dem Feststoffabtrennungsschritt nachgeschalteten Fällungsschritt Phosphatsalze (P) und
c) in einem dem Fällungsschritt nachgeschalteten Strippungsschritt Stickstoffverbindungen,
aus dem Medium (M) abgetrennt werden, wobei
vor dem Feststoffabtrennungsschritt eine Ansäuerung des Mediums (M) vorgenommen wird, bei der das Medium (M) in einer Ansäuerungsstufe (2) mit einer Säure (S) durchmischt und ein pH-Wert des Mediums (M) zwischen 3 und 6 eingestellt wird, und der Fällungsschritt eine separate Filtration des Mediums (M) zur Abtrennung ausgefallener Phosphatsalze (P) umfasst,
**dadurch gekennzeichnet, dass** zwischen dem Fällungsschritt und dem Strippungsschritt eine Konditionierung des verbleibenden Mediums (M) vorgenommen wird, bei der dieses auf eine Temperatur zwischen 40 und 60 °C erwärmt und dessen pH-Wert auf 10 bis 13 weiter angehoben wird.

2. Verfahren nach Anspruch 1, **dadurch gekennzeichnet, dass** die Ansäuerung mittels Schwefelsäure (S) erfolgt.

3. Verfahren nach Anspruch 1 oder 2, **dadurch gekennzeichnet, dass** der Feststoffabtrennungsschritt eine Vorfiltration und eine dieser nachgeschaltete Mikrofiltration umfasst.

4. Verfahren nach einem der Ansprüche 1 bis 3, **dadurch gekennzeichnet, dass** bei dem Fällungsschritt eine Alkalisierung des Mediums (M) vorgenommen wird, bei der der pH-Wert des Mediums (M) in einen Bereich von 8 bis 10 angehoben wird.

5. Verfahren nach Anspruch 4, **dadurch gekennzeichnet, dass** dem Medium (M) bei der Alkalisierung Natronlauge und/oder Calciumhydroxid zugegeben wird.

6. Verfahren nach einem der Ansprüche 1 bis 5, **dadurch gekennzeichnet, dass** beim Strippungsschritt die abgetrennten Stickstoffverbindungen in Form einer Ammoniumsulfatlösung (A) ausgegeben werden und ein anfallendes Restwasser (RW) in einer nachgeschalteten Umkehrosmose weiter aufbereitet wird.

7. Anlage zur Durchführung eines Verfahrens nach einem der Ansprüche 1 bis 6 mit einer Filtrationsstufe (10), einer Fällungsstufe (20) und einer Strippungseinrichtung (40), wobei die Fällungsstufe (20) eine separate Trenneinrichtung (28) für die Phosphatsalzabtrennung aufweist und vor der Filtrationsstufe (10) eine Ansäuerungsstufe (2) vorgesehen ist, die einen Rührbehälter (4) zum Mischen des Mediums (M) mit einer Säure (S) aufweist, **dadurch gekennzeichnet, dass** zwischen der Fällungsstufe (20) und der Strippungseinrichtung (40) eine Konditionierungsstufe (34) vorgesehen ist, die sowohl eine Dosierungseinrichtung (38) für die Zudosierung einer Lauge (L) als auch eine Temperiereinrichtung (36) für die Erwärmung des Mediums (M) aufweist.

8. Anlage nach Anspruch 7, **dadurch gekennzeichnet, dass** die Ansäuerungsstufe (2) eine pH-Wert-Mess- und Regeleinrichtung (8) beinhaltet, in Abhängigkeit von der eine Zudosierung der Säure (S) in das Medium (M) steuerbar ist.

9. Anlage nach Anspruch 7 oder 8, **dadurch gekennzeichnet, dass** die Filtrationsstufe (10) eine Grobfiltereinrichtung (12) in Form einer Schneckenpresse, einer Dekanterzentrifuge, eines Wendelfilters und/oder eines Kantenspaltfilters für die Vorfiltration und eine der Grobfiltereinrichtung nachgeschaltete Membranfiltereinrichtung (14) für die Mikrofiltration aufweist, die vibrierende Membrane und/oder Kissenmodule mit einer Porengröße von maximal 0,5 µm, vorzugsweise 0,1 µm aufweist.

10. Anlage nach einem der Ansprüche 7 bis 9, **dadurch gekennzeichnet, dass** die separate Trenneinrichtung (28) der Fällungsstufe (20) eine Dekanterzentrifuge, eine Kammerfilterpresse und/oder einen Bandfilter aufweist.

11. Anlage nach einem der Ansprüche 7 bis 10, **dadurch gekennzeichnet, dass** die Fällungsstufe (20) eine Sedimentationsstufe (32) aufweist.

## Claims

1. Method for the material recycling of a medium (M) containing ammonium and solids, such as in particular from agricultural, industrial or municipal residues, in which the following components are separated from the medium (M)
a) solids (gF, fF), in a solids separation step;
b) phosphate salts (P), in a precipitation step following the solids separation step; and
c) nitrogen compounds, in a stripping step following the precipitation step,
wherein
before the solids separation step, the medium (M) is acidified, during which acidification process the medium (M) is mixed with an acid (S) in an acidification stage (2) and a pH of the medium (M) is set between 3 and 6, and the precipitation step includes separate filtration of the medium (M) in order to separate off precipitated phosphate salts (P),
**characterized in that** the remaining medium (M) is conditioned between the precipitation step and the stripping step, during which conditioning process the medium is heated to a temperature between 40 and 60°C and the pH-value thereof is increased further to 10 to 13.

2. Method according to claim 1, **characterized in that** the acidification process is carried out using sulfuric acid (S).

3. Method according to either claim 1 or claim 2, **characterized in that** the solids separation step includes pre-filtration and microfiltration following said pre-filtration.

4. Method according to any of claims 1 to 3, **characterized in that,** during the precipitation step, the medium (M) is alkalized, during which alkalization process the pH of the medium (M) is increased to within a range from 8 to 10.

5. Method according to claim 4, **characterized in that** sodium hydroxide solution and/or calcium hydroxide is added to the medium (M) during the alkalization process.

6. Method according to any of claims 1 to 5, **characterized in that,** during the stripping step, the separated nitrogen compounds are discharged in the form of an ammonium sulfate solution (A) and residual water (RW) produced is further processed in a downstream reverse osmosis process.

7. Plant for carrying out a method according to any of claims 1 to 6, comprising a filtration stage (10), a precipitation stage (20) and a stripping device (40), the precipitation stage (20) comprising a separate separation device (28) for separating off phosphate salts and an acidification stage (2) being provided upstream of the filtration stage (10), which acidification stage comprises a stirring container (4) for mixing the medium (M) with an acid (S), **characterized in that** a conditioning stage (34) is provided between the precipitation stage (20) and the stripping device (40), which conditioning stage comprises both a metering device (38) for the metered addition of an alkaline solution (L) and a temperature control device (36) for heating the medium (M).

8. Plant according to claim 7, **characterized in that** the acidification stage (2) contains a pH measuring and regulating device (8), on the basis of which the metered addition of the acid (S) into the medium (M) can be controlled.

9. Plant according to either claim 7 or claim 8, **characterized in that** the filtration stage (10) comprises a coarse filter device (12) in the form of a screw extruder, a decanter centrifuge, a spiral filter and/or an edge gap filter for the pre-filtration, and a membrane filter device (14) downstream of the coarse filter device for the microfiltration, which membrane filter device comprises vibrating membranes and/or cushion modules having a pore size of no more than 0.5 µm, preferably 0.1 µm.

10. Plant according to any of claims 7 to 9, **characterized in that** the separate separation device (28) of the precipitation stage (20) comprises a decanter centrifuge, a chamber filter press and/or a belt filter.

11. Plant according to any of claims 7 to 10, **characterized in that** the precipitation stage (20) comprises a sedimentation stage (32).

## Revendications

1. Procédé de valorisation matière d'un milieu (M) contenant de l'ammonium et des solides, en particulier de matières résiduelles agricoles, industrielles ou municipales, dans lequel sont séparés du milieu (M)
a) des solides (gF, fF) dans une étape de séparation de solides,
b) des sels de phosphate (P) dans une étape de précipitation en aval de l'étape de séparation de solides et
c) des composés azotés dans une étape de stripage en aval de l'étape de précipitation,
dans lequel
avant l'étape de séparation de solides, une acidification du milieu (M) est effectuée, lors de laquelle le milieu (M) est mélangé avec un acide (S) dans un étage d'acidification (2) et un pH du milieu (M) est réglé entre 3 et 6, et l'étape de précipitation comprend une filtration séparée du milieu (M) pour la séparation de sels de phosphate (P) précipités,
**caractérisé en ce qu'**entre l'étape de précipitation et l'étape de stripage, un conditionnement du milieu (M) restant est effectué, dans lequel ledit milieu est chauffé à une température comprise entre 40 et 60 °C et son pH est en outre augmenté de 10 à 13.

2. Procédé selon la revendication 1, **caractérisé en ce que** l'acidification est réalisée au moyen d'acide sulfurique (S).

3. Procédé selon la revendication 1 ou 2, **caractérisé en ce que** l'étape de séparation de solides comprend une pré-filtration et une microfiltration en aval de celle-ci.

4. Procédé selon l'une des revendications 1 à 3, **caractérisé en ce que,** lors de l'étape de précipitation, une alcalinisation du milieu (M) est effectuée, lors de laquelle le pH du milieu (M) est augmenté dans une plage de 8 à 10.

5. Procédé selon la revendication 4, **caractérisé en ce que** de la soude caustique et/ou de l'hydroxyde de calcium sont ajoutés au milieu (M) lors de l'alcalinisation.

6. Procédé selon l'une des revendications 1 à 5, **caractérisé en ce que,** lors de l'étape de stripage, les composés azotés séparés sont distribués sous la forme d'une solution de sulfate d'ammonium (A) et de l'eau résiduelle (RW) produite est en outre traitée dans une osmose inverse en aval.

7. Installation permettant la mise en oeuvre d'un procédé selon l'une des revendications 1 à 6, comportant un étage de filtration (10), un étage de précipitation (20) et un dispositif de stripage (40), l'étage de précipitation (20) présentant un dispositif de séparation séparé (28) pour la séparation de sels de phosphate et un étage d'acidification (2) présentant une cuve d'agitation (4) pour le mélange du milieu (M) avec un acide (S) étant prévu avant l'étage de filtration (10), **caractérisée en ce qu'**un étage de conditionnement (34) présentant à la fois un dispositif de dosage (38) pour le dosage d'une lessive (L) et un dispositif de régulation de température (36) pour le chauffage du milieu (M) est prévu entre l'étage de précipitation (20) et le dispositif de stripage (40).

8. Installation selon la revendication 7, **caractérisée en ce que** l'étage d'acidification (2) contient un dispositif de mesure et de régulation de pH (8) en fonction duquel un dosage de l'acide (S) dans le milieu (M) peut être commandé.

9. Installation selon la revendication 7 ou 8, **caractérisée en ce que** l'étage de filtration (10) présente un dispositif de filtre grossier (12) sous la forme d'une presse à vis, d'un décanteur centrifuge, d'un filtre hélicoïdal et/ou d'un filtre à arêtes à discontinuité pour la pré-filtration et un dispositif de filtre à membrane (14) monté en aval du dispositif de filtre grossier pour la microfiltration et présentant des membranes vibrantes et/ou des modules de coussinets d'une taille de pores d'au plus 0,5 µm, de préférence de 0,1 µm.

10. Installation selon l'une des revendications 7 à 9, **caractérisée en ce que** le dispositif de séparation séparé (28) de l'étage de précipitation (20) présente un décanteur centrifuge, un filtre-presse à chambres et/ou un filtre à bande.

11. Installation selon l'une des revendications 7 à 10, **caractérisée en ce que** l'étage de précipitation (20) présente un étage de sédimentation (32).
